# EUROPÄISCHE PATENTSCHRIFT

(11) **EP 1 258 515 B1**
(45) Veröffentlichungstag und Bekanntmachung des Hinweises auf die Patenterteilung: **03.08.2005**
(21) Anmeldenummer: 02009522.0
(22) Anmeldetag: 26.04.2002
(51) Int. Cl.: C09J 7/02

(54) **Klebestreifen**
Adhesive strip
Ruban adhésif

(30) Priorität: 17.05.2001 DE 10123978
(43) Veröffentlichungstag der Anmeldung: 20.11.2002
(73) Patentinhaber: tesa AG, 20253 Hamburg (DE)
(72) Erfinder: Zimmermann, Dieter, 21635 Jork (DE); Schulze, Walter, 25421 Pinneberg (DE)

(56) Entgegenhaltungen:
- GB-A- 2 170 341

## Beschreibung

Die Erfindung betrifft einen Stapel von Klebestreifen für rückstandsfrei und zerstörungsfrei wiederlösbare Verklebungen durch Ziehen/Verstrecken in der Verklebungsebene sowie seine Herstellung und Verwendung.

Hochdehnbare elastisch oder plastisch unter Verstreckung deformierende, einseitig oder beidseitig haftklebrige Selbstklebebänder (Klebstoff-Folien), die durch Ziehen im wesentlichen in Richtung ihrer Verklebungsebene rückstands- und zerstörungsfrei wiederablösbar sind, sind bekannt. Mit ihnen hergestellte Verklebungen bieten kraftvollen halt und lassen sich doch spurlos wiederablösen, sei es mit nur geringer Beschädigung des Untergrundes oder der Fügeteile oder gar ohne. Beispielhafte Klebebänder vorgenannter Art sind in **US 4,024,312, DE 33 31 016, DE 42 22 849, WO 92/11332, WO 92/11333, US 5,516,581** und **WO 95/06691** beschrieben.

Eine häufige Konfektionierform entsprechender Produkte sind Selbstklebebandzuschnitte, zum Beispiel in Form rechteckiger Streifen, welche an einem Ende einen klebfreien Anfasserbereich besitzen (siehe DE 42 22 849, WO 92/11333 bzw. US 5,516,581). Der Anfasser dient als Grifffläche für ein späteres Wiederablösen des Klebebandes. Im Handel sind solche Produkte unter der Bezeichnung "tesa PowerStrips"®erhältlich.

Beschrieben sind in diesem Stand der Technik sowohl beidseitig als auch einseitig klebende derartige Klebestreifen, die beide aufwendig zu verpacken und dem Kunden anzubieten sind.

Die Konfektionierung, Darreichungsform und Verpackung von derartigen Klebestreifen ist aufwendig, erfordert Trennpapier und ist teuer. Somit war es Aufgabe der Erfindung, hier Abhilfe zu schaffen, also ein Produkt zur Verfügung zu stellen, das einfach gestaltet werden kann, ohne dem Verbraucher in erklärungsbedürftiger Form Probleme bei der Verwendung zu machen, aber auch ohne Entsorgungsprobleme mit Trennfolien etc..

Gelöst wird diese Aufgabe durch Klebestreifen in Form eines Stapels, wie dies näher in den Ansprüchen gekennzeichnet ist. Um Wiederholungen zu vermeiden, wird ausdrücklich auf die Ansprüche Bezug genommen.

Die einzelnen Klebestreifen können insbesondere solche sein wie in DE 33 31 016 beschrieben, insbesondere dort im Beispiel. Aber auch Produkte gemäß WO 92/11332 und WO 92/11333 sind geeignet, sowie solche gemäß dem weiteren, einleitend dargelegten Stand der Technik.

Besonders geeignet sind auch transparente derartige Klebestreifen, insbesondere solche, modifiziert nach DE 33 31 016, etwa mit einer Rezeptur vom Typ (Gew.-%):

| | | | | | |
|---|---|---|---|---|---|
| 28,50 | % | Kraton | GRP | 6919 | Firma Shell |
| 20,00 | % | Kraton | G | 1657 | Firma Shell |
| 30,00 | % | ESCOREZ | | 5618 | |
| 20,00 | % | ESCOREZ | | 5690 | Firma Exxon |
| 0,50 | % | IRGANOX | | 3052 | |
| 0,50 | % | Tinuvin | | 571 | |
| 0,50 | % | Weston | | 399 | Firma Ciba |

Zu Herstellung, Verarbeitung und Ausgestaltung wird auf DE 33 31 016 verwiesen sowie auf die als tesa Powerstrips und tesa Posterstrips im Handel befindliche Produkte.

Der eingesetzte Lack ist insbesondere ein kationisch aushärtbarer UV-Lack, z.B. SICPA 360076 von der Firma SICPA, Aarberg, der insbesondere blau abgetönt wird. Durch Beimischung von 5 Gew.-% Zylinderabstoßmittel kann die Druckfarbe für die Verarbeitung optimiert werden. Mittels einer UV-Flexodruckmaschine ARSOMA em 410 kann der Klebestreifen bei einer Maschinengeschwindigkeit von z.B. 30 m/min. über z.B. eine Flexodruckstation bedruckt werden. Die genau definierte Farbübertragung auf das Flexodruckklischee gelingt insbesondere mittels einer entsprechenden Rasterwalze im Negativrakelverfahren. Es erfolgt danach die Farbübertragung vom Klischee auf das Foliensubstrat in einer Farbhöhe von 3 - 4 µm.

Der Farbauftrag auf dem Foliensubstrat kann durch leistungsstarke UV-Strahlerröhren ausgehärtet werden. Hierfür wurde bevorzugt eine UV-Station Micro UV-Station GEW miteiner Strahlerleistung von 110 W/cm und einer Wellenlänge von 365 nm eingesetzt.

Diese Lackierung kann nun mit einem z.B. lösemittelhaltigen Trennmittel, insbesondere auf Basis langkettiger Kohlenwasserstoffe beschichtet werden. Die Beschichtung findet insbesondere an der UV-Flexodruckmaschine nach der Lackierung statt.

### Beispiel

Eine Klebfolie obiger modifizierter Zusammensetzung wird gemäß DE 33 31 016 (Beispiel) hergestellt und als 0,6 mm dicke Folie für die Bedruckung zu 20 cm breiten Mutterrollen geschnitten.

Zum Druckeinsatz kommt ein kationischer UV-Lack SICPA 360076 von der Firma SICPA, Aarberg, der blau angetönt wird. Durch Beimischung von 5 Gew.-% Zylinderabstoßmittel wird die Druckfarbe für die Verarbeitung optimiert. Mittels einer UV-Flexodruckmaschine ARSOMA em 410 wird die Deko-Folie bei einer Maschinengeschwindigkeit von 30 m/min, über eine Flexodruckstation bedruckt. Die genau definierte Farbübertragung auf das Flexodruckklischee gelingt mittels einer entsprechenden Rasterwalze im Negativrakelverfahren. Es erfolgt danach die Farbübertragung vom Klischee auf das Foliensubstrat in einer Farbhöhe von 3 - 4 µm.

Der Farbauftrag auf dem Foliensubstrat wird durch leistungsstarke UV-Strahlerröhren ausgehärtet. Hierfür wurde eine UV-Station Micro UV-Station GEW mit einer Strahlerleistung von 110 W/cm und einer Wellenlänge von 365 nm eingesetzt.

Diese Lackierung wird nun mit einem lösemittelhaltigen Trennmittel auf Basis langkettiger Kohlenwasserstoffe behandelt. Die Beschichtung findet an der UV-Flexodruckmaschine nach der Lackierung statt.

Die Trennwirkung wird so eingestellt, dass der Stapel bzw. Deko-Turm nicht so leicht auseinanderfällt und dass bei der Entnahme der einzelnen Stanzlinge keine Stretchung erfolgt. Die Trennkräfte (Lack und trennmittel auf Dekomasse) belaufen sich auf: 5 - 35 cN / cm besonders 20 - 30 cN/cm.

Von diesem Vormaterial werden dann 7 cm breite Mutterrollen geschnitten. Durch rotatives Stanzen entstehen Klebestreifen in Form der bekannten Posterstrips (in Form und Maße), die übereinander (ohne Trennpapier) konfektioniert werden. Da die Strips auf der PSA-Seite einen Anfasser haben, können die einzelnen Befestigungselemente leicht und bequem entnommen werden.

## Patentansprüche

1. Einseitig selbstklebende Klebestreifen mit klebendem Bereich und Anfasser für eine rückstandsfrei und zerstörungsfrei wiederlösbare Verklebung, wobei die Klebestreifen solche sind, die durch Ziehen/Verstrecken in der Verklebungsebene lösbar sind, **dadurch gekennzeichnet, dass** sie auf einer Seite selbstklebend ausgerüstet sind und auf der anderen Seite einen Lack aufweisen, auf den ein Release beschichtet ist, wobei die Klebestreifen in Form eines Stapels angeordnet sind, worin jeweils selbstklebende Seite eines Klebestreifens auf die mit Release/Lack versehene Seite eines anderen Klebestreifens zu liegen kommt.

2. Klebestreifen nach Anspruch 1, **dadurch gekennzeichnet, dass** die mit Release beschichtete Seite eine Trennkraft von 5 - 35 cN/cm, insbesondere 20 - 30 cN/cm hat.

3. Klebestreifen nach Anspruch 1, **dadurch gekennzeichnet, dass** das Release ein solches auf Basis langkettiger Kohlenwasserstoffe ist.

4. Klebestreifen nach Anspruch 1, **dadurch gekennzeichnet, dass** der Lack ein für ein Druckverfahren, insbesondere für den Flexodruck geeigneter Lack ist.

5. Klebestreifen nach Anspruch 1, **dadurch gekennzeichnet, dass** der Lack ein UV-gehärteter lack ist, der insbesondere im Flexodruck aufgetragen und UV-gehärtet ist.

6. Klebestreifen nach Anspruch 1, **dadurch gekennzeichnet, dass** der Lack 2 - 10 µm, insbesondere 2 - 5 µm dick ist.

7. Klebestreifen nach Anspruch 1, **dadurch gekennzeichnet, dass** jeder der Klebestreifen einen nicht-klebenden Anfasser aufweist und diese Anfasser in dem Stapel abwechselnd gegenüber liegen oder insbesondere alle übereinander liegen.

8. Klebestreifen nach Anspruch 1, **dadurch gekennzeichnet, dass** sie aus einem hochverstreckbaren, elastisch oder plastisch unter Dehnung verformbaren Material, ggf. mit einem Zwischenträger, insbesondere mit einem Folien- oder Schaumstoff-Zwischenträger bestehen.

9. Klebestreifen nach Anspruch 1, **dadurch gekennzeichnet, dass** die Adhäsion geringer ist als die Kohäsion, das Haftvermögen beim Dehnen weitgehend verschwindet, und das Verhältnis von Abzugskraft zu Reißlast mindestens 1 : 1,5 ist.

10. Klebestreifen nach Anspruch 1, **dadurch gekennzeichnet, dass** die Klebestreifen solche auf Basis von thermoplastischem Kautschuk und klebrigmachenden Harzen sind, mit hoher Elastizität und geringer Plastizität.

11. Klebestreifen nach Anspruch 1, **dadurch gekennzeichnet, dass** sie einen Zwischenträger mit beidseitig aufgetragener Acrylatkleberbeschichtung aufweisen.

12. Stapel aus Klebestreifen nach einem der Ansprüche 1 - 11.

## Claims

1. Single-sidedly self-adhesive strips with adhesive region and grip tab for an adhesive bond which can be released again without residue or destruction, the adhesive strips being of the kind releasable by pulling/stretching in the bond plane, **characterized in that** they are self-adhesive on one side and on the other side have a varnish over which a release is coated, the adhesive strips being arranged in the form of a stack in which each self-adhesive side of an adhesive strip comes to lie on the release/varnish side of another adhesive strip.

2. Adhesive strips according to Claim 1, **characterized in that** the release-coated side has a release force of 5-35 cN/cm, in particular 20-30 cN/cm.

3. Adhesive strips according to Claim 1, **characterized in that** the release is based on long-chain hydrocarbons.

4. Adhesive strips according to Claim 1, **characterized in that** the varnish is a varnish suitable for a printing process, in particular for flexographic printing.

5. Adhesive strips according to Claim 1, **characterized in that** the varnish is a UV-cured varnish which in particular is applied by flexographic printing and UV-cured.

6. Adhesive strips according to Claim 1, **characterized in that** the varnish is 2-10 µm, in particular 2-5 µm thick.

7. Adhesive strips according to Claim 1, **characterized in that** each of the adhesive strips has a non-adhesive grip tab and these grip tabs in the stack lie opposite alternately or in particular all lie one above another.

8. Adhesive strips according to Claim 1, **characterized in that** they are composed of a highly stretchable material which is deformable elastically or plastically under extension, optionally with a carrier, in particular with a film carrier or foam carrier.

9. Adhesive strips according to Claim 1, **characterized in that** the adhesion is lower than the cohesion, the adhesion largely disappears on extension, and the ratio of peel force to tensile load is at least 1:1.5.

10. Adhesive strips according to Claim 1, **characterized in that** the adhesive strips are based on thermoplastic rubber and tackifying resins, with high elasticity and low plasticity.

11. Adhesive strips according to Claim 1, **characterized in that** they have a carrier with acrylate adhesive coating applied on both sides.

12. Stack of adhesive strips according to one of Claims 1-11.

## Revendications

1. Bandes auto-adhésives simple face présentant une zone adhésive et une prise pour un collage pouvant être redétaché sans résidus et sans dégradations, les bandes adhésives étant des bandes adhésives qui peuvent être détachées par traction/étirement dans le plan de collage, **caractérisées en ce qu'**elles sont apprêtées de manière auto-adhésive sur une face et présentent sur l'autre face une laque sur laquelle est revêtu un apprêt anti-adhésif, les bandes adhésives étant disposées sous forme d'une pile, la face auto-adhésive d'une bande adhésive étant à chaque fois placée sur la face pourvue de l'apprêt anti-adhésif/laque d'une autre bande adhésive.

2. Bandes adhésives selon la revendication 1, **caractérisées en ce que** la face revêtue par l'apprêt anti-adhésif présente une force de séparation de 5 - 35 cN/cm, en particulier de 20 - 30 cN/cm.

3. Bandes adhésives selon la revendication 1, **caractérisées en ce que** l'apprêt anti-adhésif est un apprêt à base d'hydrocarbures à longue chaîne.

4. Bandes adhésives selon la revendication 1, **caractérisées en ce que** la laque est une laque appropriée pour un procédé d'impression, en particulier pour la flexographie.

5. Bandes adhésives selon la revendication 1, **caractérisées en ce que** la laque est une laque durcie aux UV, qui est en particulier appliquée par flexographie et durcie aux UV.

6. Bandes adhésives selon la revendication 1, **caractérisées en ce que** l'épaisseur de la laque est de 2 - 10 µm, en particulier de 2 - 5 µm.

7. Bandes adhésives selon la revendication 1, **caractérisées en ce que** chaque bande adhésive présente une prise non adhésive et **en ce que** ces prises sont placées dans la pile alternativement de manière opposée l'une par rapport à l'autre ou en particulier toutes les unes au-dessus des autres.

8. Bandes adhésives selon la revendication 1, **caractérisées en ce qu'**elles sont constituées par un matériau hautement étirable, déformable élastiquement ou plastiquement sous un allongement, le cas échéant avec un support intermédiaire, en particulier avec un support intermédiaire en feuille ou en mousse.

9. Bandes adhésives selon la revendication 1, **caractérisées en ce que** l'adhérence est inférieure à la cohésion, **en ce que** l'adhésivité disparaît dans une large mesure lors de l'allongement et **en ce que** le rapport force de traction à force de déchirure est d'au moins 1 : 1,5.

10. Bandes adhésives selon la revendication 1, **caractérisées en ce que** les bandes adhésives sont des bandes adhésives à base de caoutchouc thermoplastique et de résines poisseuses, présentant une élasticité élevée et une faible plasticité.

11. Bandes adhésives selon la revendication 1, **caractérisées en ce qu'**elles présentent un support intermédiaire avec un revêtement en adhésif d'acrylate appliqué sur les deux faces.

12. Pile de bandes adhésives selon l'une quelconque des revendications 1 à 11.
